(19) Europäisches Patentamt / European Patent Office / Office européen des brevets

(11) **EP 3 490 309 B1**

(12) **EUROPEAN PATENT SPECIFICATION**

(45) Date of publication and mention of the grant of the patent:
**23.03.2022 Bulletin 2022/12**

(21) Application number: **17830541.3**

(22) Date of filing: **18.07.2017**

(51) International Patent Classification (IPC):
**H04W 52/02** $^{(2009.01)}$

(52) Cooperative Patent Classification (CPC):
**H04W 52/0238; Y02D 30/70**

(86) International application number:
**PCT/ES2017/070520**

(87) International publication number:
**WO 2018/015601 (25.01.2018 Gazette 2018/04)**

(54) **ENERGY-SAVING METHOD BASED ON MICRO-SHUTDOWNS FOR A WIRELESS DEVICE IN A TELECOMMUNICATION NETWORK**

ENERGIESPARVERFAHREN AUF BASIS VON MIKROABSCHALTUNGEN FÜR EINE DRAHTLOSE VORRICHTUNG IN EINEM TELEKOMMUNIKATIONSNETZWERK

PROCÉDÉ D'ÉCONOMIE D'ÉNERGIE FONDÉ SUR DES MICROCOUPURES POUR UN DISPOSITIF SANS FIL DANS UN RÉSEAU DE TÉLÉCOMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2016 ES 201631001**

(43) Date of publication of application:
**29.05.2019 Bulletin 2019/22**

(73) Proprietors:
• **Universidad Carlos III de Madrid**
  **28918 Leganés - (ES)**
• **Universita' degli studi di Brescia**
  **25121 Brescia (IT)**

(72) Inventors:
• **AZCORRA SALOÑA, Arturo**
  **28919 Leganés (Madrid) (ES)**
• **ÚCAR MARQUÉS, Iñaki**
  **28919 Leganés (Madrid) (ES)**
• **GRINGOLI, Francesco**
  **25121 Brescia (IT)**

• **BANCHS ROCA, Albert**
  **28919 Leganés (Madrid) (ES)**
• **SERRANO YÁÑEZ-MINGOT, Pablo**
  **28919 Leganés (Madrid) (ES)**

(74) Representative: **Herrero & Asociados, S.L.**
  **Cedaceros, 1**
  **28014 Madrid (ES)**

(56) References cited:
WO-A2-2011/046701 US-A1- 2006 072 614
US-A1- 2006 072 614 US-A1- 2013 003 628
US-A1- 2013 286 914

• **CHITTABRATA GHOSH (INTEL): "Sleep States in IEEE 802.11ax Simulation Scenarios ; 11-15-0314-02-00ax-sleep-states-in-ieee-80 2-11ax-simulation-scenarios", IEEE DRAFT; 11-15-0314-02-00AX-SLEEP-STATES-IN-IEEE-80 2-11AX-SIMULATION-SCENARIOS, IEEE-SA MENTOR, PISCATAWAY, NJ USA, vol. 802.11ax, no. 2, 10 March 2015 (2015-03-10), pages 1-12, XP068082933, [retrieved on 2015-03-10]**

## Description

Technical Field of the Invention

The present invention is applicable in the field of energy efficiency and more specifically in energy-saving methods for wireless devices connected in a telecommunication network, such as 802.11 networks for example, using micro-shutdown management.

Background of the Invention

Today, IEEE 802.11 is the *de facto* standard for broadband Internet access. It evolves constantly and enables wireless local area networks (WLANs) to achieve speeds in the order of Gigabit with the latest 802.11ac updates. Nevertheless, energy efficiency remains one of its main problems due to the intrinsic CSMA mechanism, which forces wireless cards to remain active, listening to the idle channel.

The state of the art has addressed this problem, which mainly affects battery-powered devices, from several perspectives and provides some solutions aimed at mitigating this issue. One of these solutions is the Power Save (PS) mode that is widely deployed in commercial wireless cards even though it is erratically supported by drivers of said cards. By means of this mechanism, a station (STA) can enter sleep state (or "sleep mode") for long periods of time, after notifying the network access point (AP), if it has nothing to transmit. Meanwhile, packets addressed to this sleeping station are saved by the AP and indicated in the Traffic Indication Map (TIM) travelling in each beacon. From the hardware viewpoint, this mechanism requires support for two modes of operation: active mode and sleep mode. This sleep mode is implemented in the circuitry using a low-frequency secondary clock signal, so the PS mechanism dramatically reduces wireless card consumption. However, given that the card shuts down for hundreds of milliseconds, the drawback lies in the user experiencing significant connection performance degradation due to the delays that are introduced.

Actually, making use of energy saving opportunities in a CSMA protocol without disturbing its operation is complicated as the stations must perform passive listening at all times in case they receive a packet. However, as the network gradually becomes saturated, this passive listening becomes active listening for packets addressed to other stations, an event called "overhearing", and said transmissions present an opportunity for saving energy.

According to these two previously mentioned operating modes (active mode and sleep mode), it is obvious that the longer the time a card remains in sleep mode, the higher the savings will be. Some of the solutions of the state of the art try to anticipate the PS mode by performing traffic predictions, for example, by detecting short intervals of inactivity (<100 ms) and putting the interface in PS mode until the arrival of the following frame according to the prediction performed. These mechanisms involve very poor granularity (tens of milliseconds) and cause performance degradation as a result of frame loss (due to erroneous predictions), so it is only applicable to low-load scenarios.

Other solutions address the problem from a different perspective, where the clock frequency of the card is adaptively reduced during periods of inactivity and goes back to maximum frequency when a frame is detected. To achieve this, the physical layer (PHY) of 802.11 must be modified to include a low clock frequency operating mechanism. However, given that frames addressed to other stations continue to be received, it only has a good performance in low-load scenarios. Additionally, the reduction of the clock frequency for implementing these mechanisms is limited, and therefore does not cause a significant energy gain compared to the sleep mode of cards today.

Another way which has been analysed in the state of the art proposes studying micro-shutdown opportunities. To that end, the virtual 802.11 carrier sensing mechanism is used for energy-saving purposes, and basically a station sleeps when the Network Allocation Vector (NAV) or the backoff counter has a value above zero. Unfortunately, neither the time constraints of the cards nor their actual operation are taken into account. Furthermore, shutdown during the backoff window breaks with the 802.11 operation: the station must listen to the channel during each backoff time slot, and if another station accesses the channel first, the backoff counter must stop to receive the frame and then restart.

Another approach to the overhearing problem checks the recipient MAC of an incoming frame, where the wireless card transitions into sleep state for the duration of said frame if it is addressed to another station. An instantaneous shutdown time is thereby considered and the time required to return to the active mode is considered to be equivalent to a Short Interframe Space (SIFS), in addition to proposing a new frame format with a new Frame Check Sequence (FCS) intended for covering only the MAC header. In that sense, these solutions are not compatible with the standard and furthermore unnecessarily overload the protocol.

US Patent application US2006/072614 discloses a radio communication system where a sleep length calculation unit of a terminal calculates a sleep length based on what is contained in a PLCP header of a frame, and sets the calculated length on a timer; an address detection unit of the terminal detects a destination address from inside a MAC header of the frame to see if this frame is destined for another terminal. If so, then this terminal gives a power supply unit an instruction to start sleeping while causing the timer to start counting time. When the sleep length is found to have elapsed on the timer, the terminal gives the power supply unit an instruction to stop sleeping. If what is contained in the PLCP header or MAC header is not deemed reliable, then a sleep inhibit determination unit inhibits the power supply unit from going to sleep.

According to the foregoing, the solutions known up until now in the state of the art address the problem of energy efficiency by providing different solutions for managing the active and sleep modes that are, however, rather unrealistic, where either they are aimed at low-load scenarios and sacrifice performance, or break with the 802.11 operation and risk frame loss. Therefore, a solution which makes use of the micro-shutdown opportunities of wireless cards in real, saturated environments with frame bursts, but maintaining compatibility with 802.11 and CSMA standard, would be desirable.

Description of the Invention

The present invention solves the aforementioned problems by making use of the overhearing time inherent to the CSMA protocol to perform micro-shutdowns of the wireless device lasting less than a millisecond. To that end, a first aspect of the invention relates to an energy-saving method according to claim 1.

Optionally, the present invention contemplates that the sum of times further comprises a previously established minimum interframe time interval. For example, according to the 802.11 standard, this time is defined as an SIFS.

The present invention contemplates different moments in which a micro-shutdown is initiated. One option is to wait for the end of the reception of a first frame to process the information and determine performing of a micro-shutdown of a duration according to the previously described steps.

Alternatively, once the at least one part of the data transmission comprising the data of the transmission, with information concerning duration, recipient address and transmitter address, is received, a preferred embodiment of the invention contemplates performing steps a)-d) of the method of claim 1 without waiting for the reception of the rest of the transmission to end, and wherein the sum of times of step c) further comprises an additional time for the reception of the rest of the transmission.

According to one of the embodiments of the invention, the step of determining that the transmission is not addressed to the device comprises comparing a destination MAC address with a MAC address of the device, wherein the comparison is efficiently performed as bytes of the transmission are being received in the device, such that the first different byte leads to the end of the comparison.

According to one of the embodiments of the invention, the set of conditions further comprises determining that the network is in a contention period. Optionally, determining that the network is in a contention period can be based on determining that the network is not in a contention-free period, wherein a contention-free period is demarcated by an initial beacon frame and another final beacon frame.

According to one of the embodiments of the invention, the set of conditions further comprises determining, according to the transmitter address, that the transmission originates from the same network to which the device belongs.

According to one of the embodiments of the invention, the set of conditions further comprises determining that the data received is not a CTS "clear to send" frame.

According to one of the embodiments of the invention, the set of conditions further comprises determining if the counter set according to the information concerning duration is less than or equal to a maximum value of 32767 microseconds.

In one of the embodiments of the invention, the telecommunication network complies with the 802.11 standard and the counter of step c) is a network allocation (NAV) counter of the wireless device.

According to one of the embodiments of the invention, the minimum shutdown time comprises: a minimum shutdown time the device takes to shut down after a shutdown instruction is sent thereto; a minimum startup time the device takes to start up after a startup instruction is sent thereto; and a minimum preparation time the device takes to transmit data.

According to one of the embodiments of the invention, once the micro-shutdown has ended, the method further comprises waiting for at least one time interval equal to a minimum interval established to confirm that a channel is free, minus the established minimum interframe time interval, before receiving a new transmission. For example, according to the 802.11 standard, the aforementioned is equal to a period of time DIFS minus a minimum interval SIFS.

According to one of the embodiments of the invention, the wireless device is a wireless card with a microcontroller configured for performing all the steps of the method.

A second aspect of the invention relates to an energy-saving wireless device in a telecommunication network, according to claim 5.

A final aspect of the invention relates to a computer program, characterised in that it comprises program code means suitable for performing the steps of the method, when said program is run in a general purpose processor, a digital signal processor, an FPGA, an ASIC, a microprocessor, a microcontroller, or any other form of programmable hardware.

Description of the Drawings

To complement the description that is being made and for the purpose of helping to better understand the features of the invention, a set of drawings is attached as an integral part of said description in which the following has been depicted in an illustrative and non-limiting character:

Figure 1 shows the behaviour of a wireless card according to one of the embodiments of the present invention, in a RTS/CTS transmission.
Figure 2 shows in detail the transitions imposed by the hardware in a micro-shutdown.
Figure 3 shows the response of commercial hardware to startup and shutdown events by means of an actual measurement of the behaviour schematically depicted in Figure 2.
Figure 4 shows the aggregated and normalised activity for all the stations involved in the transmission according to a simulation based on the traffic carried in a real network.
Figure 5 shows the energy consumption in mAh according to the embodiment illustrated in Figure 4.
Figure 6 shows the activity breakdown per station along with energy savings.
Figure 7 shows the $E_{waste}$ energy for different combinations of p and $t_{waste}$.
Figure 8 shows the applicability in 802.11a for a typical transmission (frame + response ACK) in terms of the percentage of frame sizes lasting at least $t_{sleep,min}$ for cases with 100 $\mu$s, 200 $\mu$s, and 300 $\mu$s.

Detailed Description of the Invention

All definitions provided in this detailed description seek to facilitate thorough understanding of the invention. Accordingly, those having ordinary skill in the art will appreciate that variations, changes, and modifications of the embodiments described in the present specification are possible without departing from the scope of the invention. Furthermore, the description of functions and elements that are well known in the state of the art is omitted for the sake of clarity and concision.

Naturally, the embodiments of the invention can be implemented in a wide variety of architectural platforms, protocols, devices, and systems, so the designs and specific implementations presented herein are provided only for illustration and comprehension purposes and not for limiting aspects of the invention.

The present invention discloses an energy-saving method around the main idea of putting the interface of a wireless device, such as a wireless card, in sleep mode during those transmissions that are addressed to other stations. The proposed mechanism addresses a truly practical scenario in which the micro-shutdown opportunities corresponding to wireless 802.11 networks are advantageously made use of, where it is well known that, given the CSMA mechanism intrinsic to 802.11, the stations receive all the frames from their SSID or from others in the same channel (even some frames from adjacent channels). Upon receiving a frame, the station checks the FCS (frame check sequence) to detect errors and then discards the frame if it is not addressed to the station. In 802.11 terminology, this situation is referred to as overhearing. Given that overhearing consumes energy corresponding to the reception of a full packet that was not addressed to the station, it represents a substantial source of energy inefficiency. This consumption can therefore be prevented by means of micro-shutdowns which bring the wireless card to a low-energy mode during transmission of said frame. In fact, the PLCP (Physical Layer Convergence Procedure) physical header carries the information (delivery rate and length) required to know the duration of the PLCP service data unit (PSDU), consisting of a MAC frame or an aggregate of frames. The first 10 bytes of the MAC frame indicate the recipient of said frame, so a frame may be discarded early on during reception, and the station may enter into sleep state if the circuitry is capable of supporting shutdowns and startups in such short periods.

The present invention determines when the micro-shutdown opportunities can be made use of and when the duration indicated by the NAV counter can be used for extending the duration of the micro-shutdowns, while at the same time assuring 802.11 operation and that no frames are lost.

802.11 implements a virtual carrier sensing mechanism which reduces the need to listen to the channel. With this mechanism, a station, a card, or any other wireless device configured to that end is not only capable of occupying the channel during frame transmission, but it can also reserve the means for a longer exchange with another station. For example, this exchange may include an acknowledgement (ACK) sent by the receiver or several consecutive frames sent in a single transmission opportunity period (TXOP). To that end, the MAC frames have a duration field which updates the NAV (Network Allocator Vector), a counter indicating how long the channel will be occupied by an exchange initiated by the current frame. This duration field is included in the first 10 bytes of the MAC header as well. Therefore, the NAV can be made use of to extend the duration of the micro-shutdowns, and therefore achieve greater energy savings; however according to the present invention, opportunities to perform micro-shutdowns must comply with certain requirements for optimum operation, which requires analysing wireless card hardware capabilities, as well as analysing in detail the consequences of the various design decisions.

According to the different 802.11 modes of operation, NAV operation exhibits certain particularities. On one hand, the "distributed coordination function" DCF is the basic mechanism whereby all stations use carrier-sense multiple access with collision avoidance (CMSA/CA), with a binary exponential counter. In this scheme, the duration value offers single protection: the NAV provides protection up to the end of a frame (data, management) plus any additional packet (control frames), for example, the ACK in response to a transmission or a "clear to send" CTS message + data + ACK following a request to send RTS. In contrast, when the "point coordination function" PCF is used, the time between beacons is divided into contention periods and contention-free periods (CPs and CFPs, respectively). The access point (AP) starts the CFP by putting the duration value in the beacon at the maximum value (32,768). Then, the AP coordinates communication with the stations by sending CF-poll frames. Therefore, according to the present invention a card cannot use the NAV to extend a micro-shutdown during the CFP because it must remain ready to receive a CF-poll, but it can still sleep for the duration of each packet.

On the other hand, 802.11e introduces traffic categories and a new family of access methods referred to as "hybrid coordination function," HCF, which includes "enhanced distributed channel access" EDCA and "HCF controlled channel access" HCCA. These two methods are the versions with DCF and PCF service quality, respectively. There are two classes of duration values under EDCA: single protection, such as in DCF, and multiple protection, where the NAV provides protection up to the end of a frame sequence in the same TXOP. HCCA works similarly to PCF, but under HCCA, the access point starts the CFP in a dynamic manner. In the CFP, when the access point sends a CF-poll to a station, it puts the NAV of other stations at a value equal to the TXOP depending on the traffic category. Nevertheless, if the station finishes transmitting before the end of the TXOP, the access point may reclaim that time by re-setting the NAV of the rest of the stations with another CF-poll. As a result, according to the present invention the NAV cannot be used either in this family of access methods for extending a micro-shutdown during a CFP.

Finally, an additional situation that the present invention contemplates as a limitation on the use of NAV, relates to 802.11g, CTS-to-self frames are introduced for interoperating with 11b networks. CTS-to-self frames are standard CTS frames that are transmitted at a legacy rate, not preceded by an RTS, and sent by a station to itself to occupy the channel before sending another frame. In this case, a station cannot know which will be the recipient of the next frame. Therefore, the wireless cards according to the present invention must not use the duration field of a CTS to perform micro-shutdowns.

Taking these limitations into account, to assure that no frames are lost upon introducing the proposed energy-saving method, the present invention furthermore contemplates hidden node and capture effect problems given that, although not described by the standard, these effects are well-known, widely studied in literature, and inevitably present in real deployments. The design of the algorithm proposed by the present invention according to one of the embodiments thereof limits the micro-shutdown opportunities of a wireless card to packets from the same network.

It is well known that a high-power transmission can completely blind another transmission with a lower signal-to-noise ratio (SNR). Theoretically, two stations occupying the channel at the same time give rise to a collision, but actually, if the difference in power is high enough, a wireless card is capable of perfectly decoding the high-power frame, ignoring the other transmission. Basically, there are two types of capture effect depending on the order of the frames: if the high-power frame starts first, the situation is equivalent to receiving a frame and some noise thereafter, so it does not affect the behaviour of a card which implements the method of the present invention.

In the opposite case, the receiving card stops deco frame and switches to decoding the other frame with a higher power. If this frame arrives during the PLCP of the former, the method of the present invention will still not have made any decision, so it would not be affected. However, given that a high-power transmission may blind a low-power transmission at any time, even when the actual data transmission (the MAC frame) has begun, there is a need to consider the scenario in which a station receives low-power frames originating from distant networks. If the access point is not capable of seeing said frames, a hidden node issue arises. Obviously, none of those frames is addressed to the present station, but if attempts are made to save energy by performing micro-shutdowns during those transmissions, potential transmissions (with a higher power) originating from the actual network, which are addressed to the station and would indeed be received as a result of the capture effect, would be lost. Therefore, the algorithm of the present invention contemplates that, under hidden node conditions, frames that would indeed be received under normal conditions may be lost, and as a result the present invention proposes avoiding micro-shutdowns when the packets originate from networks other than the same network itself. To discard packets originating from other networks, the basic service identifier BSSID in the destination address is checked for frames addressed to the access point. In that sense, if the frame was sent by an access point, it is only necessary to read 6 additional bytes (in the worst case), which are included in the transmitter address, which does not necessarily involve a longer modulation time. For example, for OFDM 11ag rates, this means an additional 8 $\mu$s at 6 and 9 Mbps, 4 $\mu$s at 12, 18, and 36 Mbps, and no additional time at 24, 48, and 54 Mbps.

In view of all the preceding limitations, a preferred embodiment of the present invention, which also adds the time constraints imposed by the actual hardware, saves energy during transmissions from the same network itself in which the station is not involved, by sleeping during overhearing periods and making use of the NAV mechanism when possible which, as explained above, occurs during CP periods and preventing at the same time CTS frames.

After a micro-shutdown, two situations may arise:

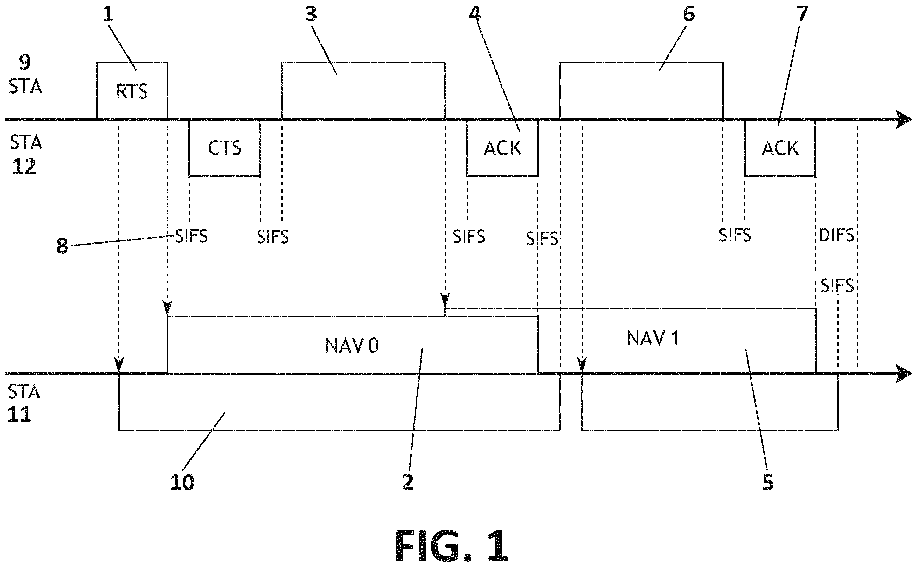

- The card wakes up at the end of a frame exchange, for example, after data + ACK. All the stations must wait for an interframe space interval DIFS before returning to contention.
- The card wakes up in the middle of a frame exchange, for example, as depicted in Figure 1, one card (9) seeks to establish communication with a second card (12), for which it sends a request to send RTS (1) which other cards (11) that are not the recipients of the communication also receive. This involves setting the NAV counter (2) up to the end of a fragment (3) plus the ACK (4) and the card taking advantage to perform a micro-shutdown (10). This first fragment sets the NAV (5) up to the end of the second fragment (6) plus the corresponding ACK (7), but the sleeping card obviously does not see it. Once the card wakes up and returns to active state, a period of silence having a duration corresponding to the minimum interframe interval, SIFS (8) is observed, and then the second fragment comes thereafter, setting the NAV again.

This means that a station can remain in the sleep state for an additional SIFS, as shown in Figure 1, and wait in the active mode for at least a DIFS before returning to contention.

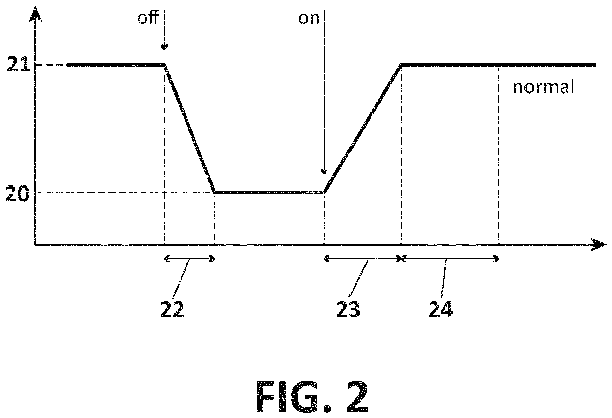

Up until now, how long a micro-shutdown may be, has been described. The limitations imposed by the hardware which, according to the present invention, are fundamental for defining how short a micro-shutdown can be, or in other words, for defining the minimum period supported by a card, are described below. For this purpose, the parameters shown in Figure 2 are defined below, where the vertical axis represents power and the horizontal axis time:

$t_{off}$ (22): the time required to switch from active mode (21) to sleep mode (20).
$t_{on}$ (23): the time required to return to sleep mode.
$t_{ready}$ (24): the time required for the circuitry to stabilise and be ready to transmit or receive packets.

Based on these parameters, the minimum time, $t_{sleep,min}$, is calculated as:

$$t_{sleep,min} = t_{off} + t_{on} + t_{ready} \qquad (1)$$

The steps of the method proposed by the present invention can be more clearly understood by observing the algorithm included by way of example below. According to one of the embodiments of the present invention, said algorithm describes the main loop of the microcontroller of a wireless card implementing said embodiment of the present invention.

Once the first 16 bytes of the frame have been received, the receiver knows the duration ($t_{NAV}$), the destination address ($R_A$), and the transmitter address ($T_A$). One of the embodiments contemplates efficiently comparing MAC addresses as the bytes are being received, such that the first different byte (if the first byte of the $R_A$ has the multicast bit set to zero, i.e., $R_A$ is unicast) triggers the procedure to enter sleep mode (SET SLEEP). Additionally, the main loop maintains a global variable (C) which indicates whether the network is in contention period (CP) or contention-free period (CFP). The implementation according to one of the embodiments of the invention is based on sensing beacon frames indicating the start and the end of each CFP.

The procedure (referred to as "SET SLEEP" in the exemplary algorithm) for activating the sleep mode and causing a micro-shutdown takes as input the time remaining until the end of the frame in the air ($t_{DATA}$) and the duration value ($t_{NAV}$). This latter is only used if it is a valid value and the network is furthermore in a CP period. Then, the card performs a micro-shutdown having a duration of $t_{sleep} = t_{DATA} + t_{NAV} +$ an SIFS interval (provided that the total sum is greater than the previously established minimum time of the card), waits for a DIFS interval to complete, and returns to the main loop:

Exemplary algorithm:

```
1:  ...                                                        ▷ Initialisation
2:  global C ← true                                            ▷ Contention flag
3:  loop                                                       ▷ Main loop
4:     ...
5:     while bytes remaining do                                ▷ Receiving loop
6:        READ
7:        if R_A = BSSID OR (T_A = BSSID AND
              R_A is other unicast MAC)  then
8:           SET SLEEP(t_DATA, t_NAV)
9:        end if
10:    end while
11:    CHECK FCS                                               ▷ Frame received
12:    if is Beacon AND t_NAV > 0 then                         ▷ CFP starts
13:       C ← false
14:    else if is CF End then                                  ▷ CFP ends
15:       C ← true
16:    end if
17:    ...
18 end loop
19: procedure SET SLEEP(t_DATA, t_NAV)
20:    t_sleep ← t_DATA + t_SIFS
21:    if C AND is not CTS AND t_NAV ≤ 32767 then
22:       t_sleep ← t_sleep + t_NAV
23:    end if
24:    if t_sleep ≥ t_sleep,min then
25:       SLEEP(t_sleep)
26:       WAIT(t_DIFS − t_SIFS)
27:       go to Main loop
28:    end if
29:    go to Receiving loop
30: end procedure
```

Additionally, the present invention dispenses with cyclic redundancy mechanisms for detecting errors as the impact of errors on the first 16 bytes of the MAC header (which are important for the decisions of the algorithm making use of micro-shutdown opportunities) does not cause greater performance degradation or error rates (BER) than those obtained under normal channel conditions.

In terms of the hardware part involved, as introduced above, the present invention advantageously makes use of micro-shutdown opportunities offered by an 802.11 network taking into account some limitations which assure better operation thereof. However, the hardware capabilities of the wireless device used are fundamental for adjusting the algorithm and applying it in real scenarios, where transition times must not be neglected. Times $t_{off}$, $t_{on}$, and $t_{ready}$ are particular for each device, so they must be experimentally analysed for characterisation.

A particular case in which an Atheros AR9280 Half-height Mini PCI Express wireless card has been used, is described below by way of example. However, the characterisation would be performed in the same way with any other model. In this case, it is an 11abgn-capable card which supports up to 2 spatial streams and 40 MHz channels (up to 300 Mbps). Its main clock has a frequency of 44 MHz for 20 MHz channels and 88 MHz for 40 MHz channels in the 2.4 GHz band, and a frequency of 40 MHz for 20 MHz channels and 80 MHz for 40 MHz channels in the 5 GHz band. This clock turns off completely and gives way to a 32 kHz secondary clock when transitioning to the low-energy mode or sleep mode.

To proceed with the characterisation, the card is connected to a computer through a flexible adaptor, for example, x1 PCI Express to Mini PCI Express adaptor from Amfeltec. This adaptor connects the peripheral device (PCI) bus data channels to the computer and provides an ATX-type connector for external power supply. The same computer contains a high-accuracy multifunction data acquisition card (DAQ) optimised for 18-bit accuracy. Its temporal resolution is 50 ns with an accuracy of 50 ppm. The operations sent to the card through the computer and the energy measurements taken with the DAQ can thereby be correlated using the same time basis. The power supply can be, for example, a Keithley 2304A DC-type power supply optimised for testing battery-operated wireless communications devices. Power is supplied through a measurement circuit that extracts voltage and converts current with a precision measurement resistor and an amplifier. Considering that the DAQ has a certain stabilisation time, this is modelled as a small capacitor which acts as a low-pass filter. Therefore, two voltage followers are established as input to the DAQ to reduce the output impedance of the measurement circuit. Finally, with the described assembly, the parameters $t_{off}$, $t_{on}$, and $t_{ready}$, defined above and depicted in Figure 2, are measured for obtaining the minimum shutdown time ($t_{sleep,min}$) supported by the card.

The following steps are then run from the kernel space for characterising the card according to this experiment:

1) First, the card is in active mode connected to an access point in 11a mode.
2) A raw connection (Linux AF PACKET socket) is created and a small fake packet is prepared.
3) The card is forced to shut down by means of writing a register which has been proven to be almost instantaneous in kernel time.
4) A 60 $\mu$s delay is introduced in order to give the card time to react.
5) Startup is forced by means of writing another register.
6) A configurable time is waited out.
7) The fake frame is sent at a low level, i.e., calling the ndo_start_xmit() function from net_device directly. A very quick execution is thereby assured.

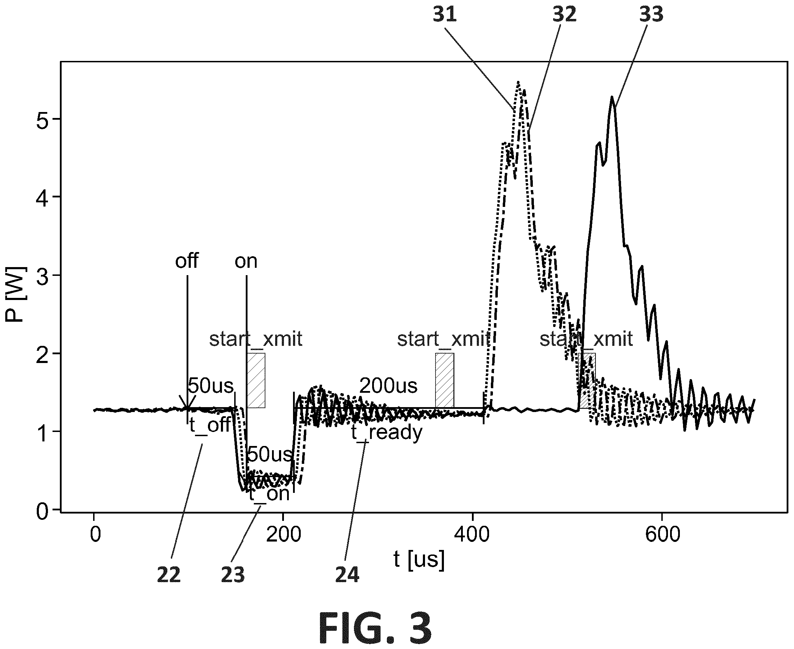

The hardware response is shown in Figure 3. As can be seen, the card spends 50 $\mu$s consuming in active mode from the moment the shutdown event is triggered until the card actually shuts down. The startup event is triggered 10 $\mu$s later. Again, the card needs another 50 $\mu$s to return to active mode. It must be noted that the transmission of the packet is triggered right after the startup event and said transmission spends very little time in kernel (the time of those instructions corresponds with the width of the "start_xmit" rectangle). However, surprisingly, the card sends the packet 200 $\mu$s after returning to active mode, although the frame was ready much earlier.

To understand the reasons for this delay in transmission, more experiments are performed in which the frame is triggered with different delays, also depicted in the same Figure 3 for delay values between the startup event and the transmission of the packet of 0 (31), 200 (32), and 350 (33) $\mu$s, arriving at the conclusion that the card always starts transmitting at the same point regardless of when the transmission is triggered in the kernel space within those first 250 $\mu$s after the startup event. Beyond that point, transmission starts almost instantaneously. These experiments demonstrate that this specific card needs $t_{ready}$ = 200 $\mu$s in order to become operative again.

In summary, this characterisation shows that if a micro-shutdown is to be performed with this card during a certain $t_{sleep}$ time, it must be taken into account that said card supports a minimum $t_{sleep,min}$ time of 300 $\mu$s. Therefore, $t_{sleep} \geq t_{sleep,min}$ must be satisfied, and the interruption must be programmed to again wake the interface up 250 $\mu$s before the end of the shutdown period.

It must also be pointed out that the card wastes energy during a constant time $t_{waste}$:

$$t_{waste} = t_{off} + t_{ready} \qquad\qquad (2)$$

which is equal to 250 $\mu$s as well. Therefore, the total time the card spends in the low-energy state is $t_{sleep}$ - $t_{waste}$.

This characterisation has been performed for one card in particular, but the same process can be repeated for any other wireless device which interoperates in an 802.11 network and is to be implemented according to the present invention. Energy saving is maximised while at the same time network operation is assured, even in saturated scenarios.

To augment the advantages of the present invention, shown below are evaluations of the energy saving achieved in a real network which include in the stations thereof wireless cards like one characterised above and implement the method proposed by the present invention. To perform a similar evaluation, 802.11a traces with 44 million packets, divided into 43 files, from the SIGCOMM'08 public data set, have been used.

According to the evaluation of this particular embodiment, the methodology used for each trace file consists of discovering, in a first pass, all the stations and access points present. Each station is then mapped into its BSSID and a bit array is implemented to maintain the status in each instant (online or offline). Given that it is hard to determine when a station is offline from a capture, because they almost always disappear without sending a disassociation frame, a criterion usually followed by access points (APs) is used, whereby a station is considered online if it has transmitted at least one frame within the last 5 minutes. In a second pass, the amount of time each station spends (without applying the algorithm of the present invention) in the transmission, reception, overhearing, and active states is measured (considering that the online stations are always active; i.e., if a station announces that it is entering PS mode, it is ignored). In a third pass, the amount of time each station spends (now applying the algorithm of the present invention) in the same states plus the low-energy (sleep) state is measured. It is found that, as expected, the transmission and reception times coincide with the preceding pass. As part of the active (idle) time, the time wasted in micro-shutdowns as a result of hardware limitations ($t_{\text{waste}}$) is included. After this processing, there are several duplicate identifiers (MAC addresses) (i.e., a station which appears in more than one file). Those entries are time aggregated for each state. At this point, the activity time is defined as the sum of transmission, reception, overhearing, sleep, and wasted time. Active time is not taken into account in any of these states because the objective is to estimate how much energy can be saved within said periods, which are the only ones that arise while the channel is occupied. Using said definition, it is obvious that most stations exhibit very little activity (participate for a few seconds and disappear). Therefore, filtration by the upper decile is performed to obtain the 42 stations with higher activity.

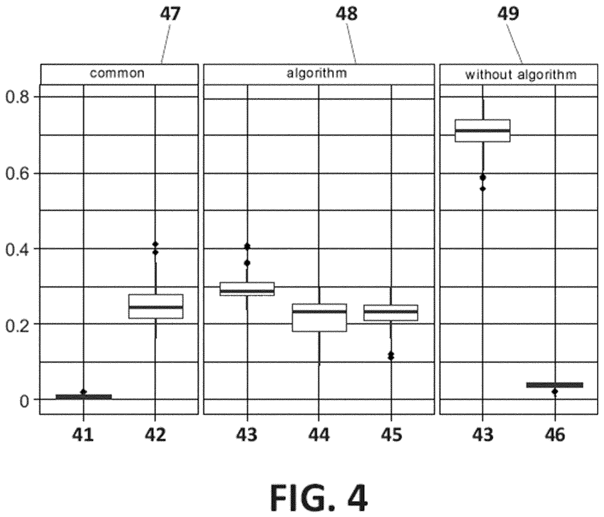

Figure 4 depicts the aggregated and normalised activity for all the stations. The fraction of the activity time is depicted on the vertical axis as a function of the state of the card (transmission (41), reception (42), overhearing (43), low-energy time (44), wasted time (45), active time of the interframe spaces (46)). The transmission and reception times are labelled as "common" (47) because the stations spend the same time in these states with (48) or without (49) the algorithm used in the present invention. It is obvious that the mechanism of the present invention effectively reduces the overhearing time from a median of 70% to about 30%. The card consistently uses less overhearing time because this time difference, along with some active time of the interframe spaces, is converted into micro-shutdowns, i.e., low-energy time and wasted time.

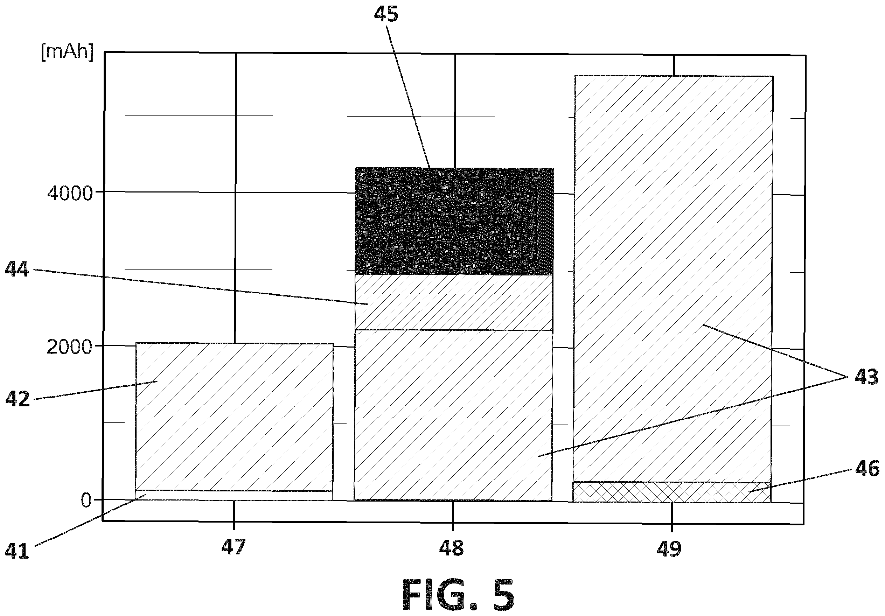

This activity aggregation allows calculating total consumption using the data obtained in card characterisation. Figure 5 shows the energy consumption in units of mAh (assuming a typical 3.7 V battery) and according to the embodiment described above and illustrated in Figure 4. The saved energy exceeds 1200 mAh (15.8%) even with the constraints imposed by this card which prevent the card from sleeping when the time is not long enough on one hand, and from wasting a large amount of time servicing the circuit during each micro-shutdown on the other hand.

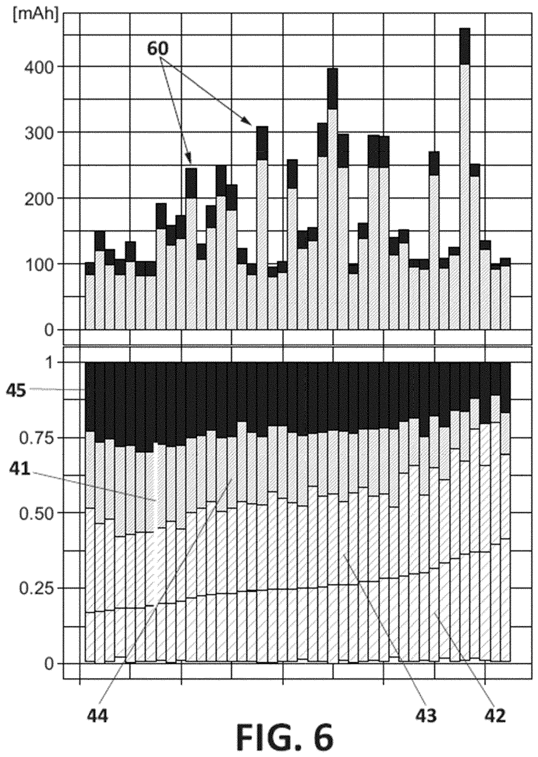

Figure 6 shows a breakdown by station. The graph at the bottom shows the activity breakdown per station according to the algorithm of one of the embodiments of the present invention (the white bars corresponding to transmission (41) can barely be seen). The fact that the overhearing time is reduced more or less to a constant fraction for all the stations is of interest (i.e., with the algorithm, this time represents more or less 30% of the total activity per station), whereas the less participative stations (left side of the graph) spend more time sleeping. The graph at the top shows consumption per station with the algorithm plus the energy saving (60) in dark grey, which is in the order of tens of mAh per station.

To demonstrate the practical implications of the present invention, it must be emphasised that the gains of the proposed algorithm depend on the behaviour of the circuitry involved. Its capabilities, in terms of time constraints, determine the maximum savings that can be achieved. Particularly, each micro-shutdown wastes (in comparison with an ideal scheme in which the wireless card is in low-energy mode throughout the entire micro-shutdown) a fraction of energy which is given by:

$$E_{\text{waste}}(t) = (1 - \rho)\frac{t_{\text{waste}}}{t} + \rho$$

where:

$\rho = P_{\text{sleep}}/P_{\text{overh}} \approx P_{\text{sleep}}/P_{\text{idle}}$; and
$t_{\text{waste}}$ is the fixed part defined in Equation (2).

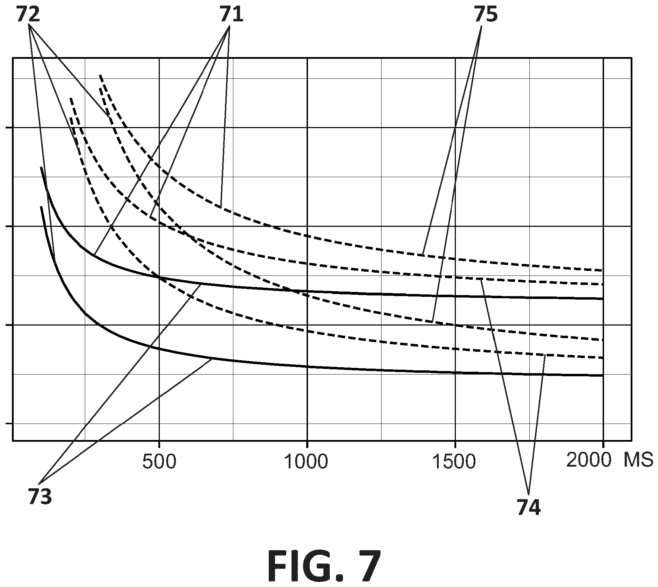

Figure 7 depicts said energy $E_{\text{waste}}$ for the particular embodiment described above in which an AR9280 card is used (p = 0.3, $t_{\text{waste}}$ = 250) together with other values. Clearly, although a low p is always desirable (evolution is observed in the 3 curves corresponding to values p = 0.1 (72) and p = 0.3 (71)), an improvement of $t_{\text{waste}}$ is fundamental for improving performance in short micro-shutdowns (evolution in the curves is reflected for values of 50 μs (73), 150 μs (74), and 250 μs (75)). Similarly, the minimum shutdown time, $t_{\text{sleep,min}}$ limits the applicability of the present invention. For example, considering a common case in 11ag networks, the transmission of a frame (up to 1500 bytes) followed by the corresponding ACK:

$$t_{\text{sleep,min}} \quad \leq \quad t_{\text{DATA}} \quad + \quad t_{\text{SIFS}} \quad + \quad t_{\text{ACK}} \quad +$$
$$t_{\text{SIFS}}$$

and expanding the right side,

$$t_{sleep,min} \leq \frac{8(14 + I_{min} + 4)}{\lambda_{DATA}} + t_{SIFS} + t_{PLCP} + \frac{8(14 + 2)}{\lambda_{ACK}} + t_{SIFS}$$

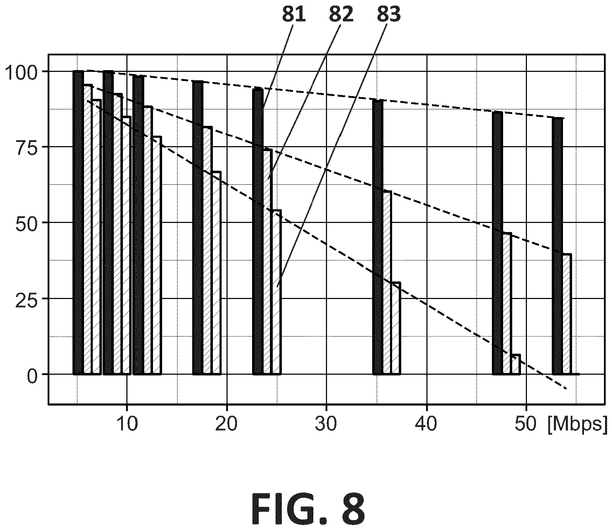

where $I_{min}$ is the minimum amount of data (in bytes, and removing the MAC header and the FCS) that a frame must contain in order to last the minimum shutdown time $t_{sleep,min}$. Based on in this $I_{min}$, Figure 8 defines the applicability in 802.11a in terms of the percentage of frame sizes ($\leq$ 1500 bytes) lasting at least $t_{sleep,min}$ for cases with 100 $\mu$s (81), 200 $\mu$s (82), and 300 $\mu$s (83). Again, an improvement in $t_{waste}$ would not only boost savings per micro-shutdown but also applicability.

Moreover, there is also a need to take into account that applicability may be affected by the evolution of the standard. Particularly, 802.11n introduced and 802.11ac continued with a series of changes which allow increasing the speeds to Gigabit. These improvements are largely based on MIMO methods and the use of more coupled channels. Nevertheless, a 20 MHz channel is still more or less equivalent to the 11ag case. It is true that some improvements allow improving the speed in a single channel from 54 to 72 Mbps under optimum conditions. However, it is also true that the PLCP is much longer to accommodate the complexity of new coding schemes. This overhead not only extends each transmission, but also encourages the use of frame aggregation. Therefore, the increase in capacity, in these amendments and in future ones, does not necessarily mean shorter channel usage times, so the solution provided by the present invention is still applicable.

In any case, for the future, reducing card time constraints is essential to improve energy savings. Firstly, $t_{off}$ and $t_{on}$ must depend on the internal firmware implementation (i.e., the complexity in saving and restoring state). Secondly, transmissions are significantly more aggressive in terms of sudden change in power than when returning from the low-energy state, so the time required for stabilising the previously characterised card seems to show an evident room for improvement. Thirdly, the 802.3 standard goes beyond 802.11 and, albeit to a limited extent, defines new transition parameters for the interfaces (e.g., $t_w$ physical-layer would be equivalent to $t_{on} + t_{ready}$) found in the range of tens of $\mu$s in the worst cases. Due to all these reasons, wireless card manufacturers carry out a line of development which leads one to think that within a short period of time, the capabilities of the invention herein proposed will even be enhanced and more advantageous savings schemes could be offered as standardisation activities progress.

## Claims

1.  Energy-saving method for a wireless device in a telecommunication network which complies with the IEEE 802.11 standard, the method comprising the following steps:

    a) receiving, in said wireless device, at least one part of a data transmission, wherein said part comprises information concerning the frame length contained in the physical-layer header, a duration field contained in the link-layer header, recipient address and transmitter address of said transmission; and without waiting for the reception of the rest of the data transmission to end,

    b) determining compliance with a first set of conditions which at least comprises determining, according to the recipient address, that the transmission is not addressed to the device; and determining, according to the transmitter address, that the transmission originates from the same network to which the device belongs;

    c) in the event that the first set of conditions is complied with, determining compliance with a second set of conditions which at least comprises determining that the network is in a contention period, based on determining that the network is not in a contention-free period demarcated by an initial beacon frame and another final beacon frame; determining that the data received is not a CTS "clear to send" frame; and determining if the value of the duration field is less than or equal to a maximum value of 32767 microseconds;

    d) in the event that the first set of conditions is complied with, determining whether a sum of times exceeds a minimum shutdown time previously established according to hardware limitations of the device, wherein said sum of times comprises at least:

    - the time of duration of the rest of the data transmission plus a previously established minimum interframe interval; and
    - in the event that the second set of conditions is complied with, the value of the duration field;

    and wherein the minimum shutdown time comprises: a minimum shutdown time the device takes to shut down after a shutdown instruction is sent thereto; a minimum startup time the device takes to start up after a startup instruction is sent thereto; and a minimum preparation time the device takes to be ready to transmit or receive data; and

e) in the event that the sum is greater than said minimum shutdown time previously established according to hardware limitations of the device, performing a micro-shutdown of the device with a duration equal to the value of said sum of times.

2. Method according to claim 1, wherein the step of determining that the transmission is not addressed to the device comprises comparing a destination MAC address with a MAC address of the device, wherein the comparison is performed as bytes of the transmission are being received in the device, such that the first different byte leads to the end of the comparison.

3. Method according to any of the preceding claims, wherein the method further comprises, once the micro-shutdown has ended, waiting for at least one time interval equal to a minimum interval established to confirm that a channel is free, minus the established minimum interframe time interval, before receiving a new transmission.

4. Method according to any of the preceding claims, wherein the wireless device is a wireless card with a microcontroller configured for performing all the steps of the method.

5. Energy-saving wireless device in a telecommunication network which complies with the IEEE 802.11 standard, comprising a wireless card and a microcontroller configured for:

receiving at least one part of a data transmission, wherein said part comprises information concerning the frame length contained in the physical-layer header, a duration field contained in the link-layer header, recipient address and transmitter address of said transmission; and without waiting for the reception of the rest of the data transmission to end;

determining compliance with a first set of conditions which at least comprises determining, according to the recipient address, that the transmission is not addressed to the device; and determining, according to the transmitter address, that the transmission originates from the same network to which the device belongs;

in the event that the first set of conditions is complied with, determining compliance with a second set of conditions which at least comprises determining that the network is in a contention period, based on determining that the network is not in a contention-free period, which is demarcated by an initial beacon frame and another final beacon frame; determining that the data received is not a CTS "clear to send" frame; and determining if the value of the duration field is less than or equal to a maximum value of 32767 microseconds;

in the event that the first set of conditions is complied with, determining whether a sum of times exceeds a minimum shutdown time previously established according to hardware limitations of the device, wherein said sum of times comprises at least: the time of duration of the rest of the data transmission plus a previously established minimum interframe interval; and in the event that the second set of conditions is complied with, the value of the duration field;

and wherein the minimum shutdown time comprises: a minimum shutdown time the device takes to shut down after a shutdown instruction is sent thereto; a minimum startup time the device takes to start up after a startup instruction is sent thereto; and a minimum preparation time the device takes to be ready to transmit or receive data; and

in the event that the sum is greater than said minimum shutdown time previously established according to hardware limitations of the device, performing a micro-shutdown of the device with a duration equal to the value of said sum of times.

6. Computer program comprising program code means suitable for performing the steps of the method according to any of claims 1 to 4 when said program is run in a general purpose processor, a digital signal processor, an FPGA, an ASIC, a microprocessor, a microcontroller, or any other form of programmable hardware.

**Patentansprüche**

1. Energiesparverfahren für eine drahtlose Vorrichtung in einem Telekommunikationsnetzwerk, welches den Standard IEEE 802.11 erfüllt, wobei das Verfahren die folgenden Schritte umfasst:

a) Empfangen zumindest eines Teils einer Datenübertragung in der drahtlosen Vorrichtung, wobei der Teil Informationen bezüglich der Frame-Länge, die in dem Bitübertragungsschicht-Header enthalten ist, eines Dauerfeldes, das in dem Sicherungsschicht-Header enthalten ist, Empfängeradresse und Senderadresse der Übertragung umfasst; und ohne Warten darauf, dass der Empfang der restlichen Datenübertragung endet,

b) Bestimmen der Einhaltung eines ersten Satzes von Bedingungen, was zumindest das Bestimmen gemäß der Empfängeradresse, dass die Übertragung nicht an die Vorrichtung adressiert ist, und das Bestimmen gemäß der Senderadresse, dass die Übertragung aus demselben Netzwerk stammt, zu dem die Vorrichtung gehört, umfasst;

c) für den Fall, dass der erste Satz von Bedingungen eingehalten wird, Bestimmen der Einhaltung eines zweiten Satzes von Bedingungen, was zumindest das Bestimmen, dass sich das Netzwerk in einer Konkurrenzperiode befindet, basierend auf dem Bestimmen, dass sich das Netzwerk nicht in einer konkurrenzfreien Periode befindet, die von einem anfänglichen Beacon-Frame und einem anderen letzten Beacon-Frame begrenzt wird; das Bestimmen, dass die empfangenden Daten kein CTS-"clear to send"-Frame sind, und das Bestimmen, ob der Wert des Dauerfeldes kleiner als oder gleich dem Höchstwert von 32.767 Mikrosekunden ist, umfasst;

d) für den Fall, dass der erste Satz von Bedingungen eingehalten wird, Bestimmen, ob eine Summe von Zeiten eine minimale Abschaltzeit übersteigt, die zuvor gemäß Hardware-Einschränkungen der Vorrichtung festgelegt wurde, wobei die Summe von Zeiten zumindest:

- die Zeitdauer der restlichen Datenübertragung plus ein zuvor festgelegtes minimales Interframe-Intervall und
- für den Fall, dass der zweite Satz von Bedingungen eingehalten wird, den Wert des Dauerfeldes umfasst;

und wobei die minimale Abschaltzeit: eine minimale Abschaltzeit, welche die Vorrichtung benötigt, um abzuschalten, nachdem ihr eine Abschaltanweisung gesandt wurde; eine minimale Startzeit, die die Vorrichtung benötigt, um zu starten, nachdem ihr eine Startanweisung gesandt wurde; und eine minimale Vorbereitungszeit, die die Vorrichtung benötigt, um bereit zu sein, Daten zu senden oder zu empfangen, umfasst und

e) für den Fall, dass die Summe größer ist als die minimale Abschaltzeit, die zuvor gemäß Hardware-Einschränkungen der Vorrichtung festgelegt wurde, Vornehmen einer Mikroabschaltung der Vorrichtung mit einer Dauer gleich dem Wert der Summe von Zeiten.

2. Verfahren nach Anspruch 1, wobei der Schritt des Bestimmens, dass die Übertragung nicht an die Vorrichtung adressiert ist, das Vergleichen einer MAC-Zieladresse mit einer MAC-Adresse der Vorrichtung umfasst, wobei der Vergleich vorgenommen wird, wenn Bytes der Übertragung in der Vorrichtung empfangen werden, so dass das erste abweichende Byte zum Ende des Vergleichs führt.

3. Verfahren nach einem der vorstehenden Ansprüche, wobei das Verfahren, nachdem die Mikroabschaltung geendet hat, ferner das Warten für mindestens ein Zeitintervall, das einem festgelegten minimalen Intervall gleicht, um zu bestätigen, dass ein Kanal frei ist, minus das festgelegte minimale Interframe-Zeitintervall, bevor eine neue Übertragung empfangen wird, umfasst.

4. Verfahren nach einem der vorstehenden Ansprüche, wobei die drahtlose Vorrichtung eine Wireless Card mit einem Mikrocontroller ist, die dafür ausgebildet ist, alle Schritte des Verfahrens auszuführen.

5. Drahtlose Energiesparvorrichtung in einem Telekommunikationsnetzwerk, die den Standard IEEE 802.11 erfüllt, umfassend eine Wireless Card und einen Mikrocontroller, die dafür ausgebildet sind:

zumindest einen Teil einer Datenübertragung zu empfangen, wobei der Teil Informationen bezüglich der Frame-Länge, die in dem Bitübertragungsschicht-Header enthalten ist, eines Dauerfeldes, das in dem Sicherungsschicht-Header enthalten ist, Empfängeradresse und Senderadresse der Übertragung umfasst; und ohne darauf zu warten, dass der Empfang der restlichen Datenübertragung endet;

die Einhaltung eines ersten Satzes von Bedingungen zu bestimmen, was zumindest das Bestimmen gemäß der Empfängeradresse, dass die Übertragung nicht an die Vorrichtung adressiert ist, und das Bestimmen gemäß der Senderadresse, dass die Übertragung aus demselben Netzwerk stammt, zu dem die Vorrichtung gehört, umfasst;

für den Fall, dass der erste Satz von Bedingungen eingehalten wird, die Einhaltung eines zweiten Satzes von Bedingungen zu bestimmen, was zumindest das Bestimmen, dass sich das Netzwerk in einer Konkurrenzperiode befindet, basierend auf dem Bestimmen, dass sich das Netzwerk nicht in einer konkurrenzfreien Periode befindet, die von einem anfänglichen Beacon-Frame und einem anderen letzten Beacon-Frame begrenzt wird; das Bestimmen, dass die empfangenden Daten kein CTS-"clear to send"-Frame sind; und das Bestimmen, ob der Wert des Dauer-Feldes kleiner als oder gleich dem Höchstwert von 32.767 Mikrosekunden ist, umfasst; für den Fall, dass der erste Satz von Bedingungen eingehalten wird, zu bestimmen, ob eine Summe von Zeiten eine minimale Abschaltzeit übersteigt, die zuvor gemäß Hardware-Einschränkungen der Vorrichtung festgelegt wurde, wobei die Summe von Zeiten zumindest:

- die Zeitdauer der restlichen Datenübertragung plus ein zuvor festgelegtes minimales Interframe-Intervall und
- für den Fall, dass der zweite Satz von Bedingungen eingehalten wird, den Wert des Dauerfeldes umfasst;

und wobei die minimale Abschaltzeit: eine minimale Abschaltzeit, welche die Vorrichtung benötigt, um abzuschalten, nachdem ihr eine Abschaltanweisung gesandt wurde; eine minimale Startzeit, die die Vorrichtung benötigt, um zu starten, nachdem ihr eine Startanweisung gesandt wurde; und eine minimale Vorbereitungszeit, die die Vorrichtung benötigt, um bereit zu sein, Daten zu senden oder zu empfangen, umfasst und für den Fall, dass die Summe größer ist als die minimale Abschaltzeit, die zuvor gemäß Hardware-Einschränkungen der Vorrichtung festgelegt wurde, eine Mikroabschaltung der Vorrichtung mit einer Dauer gleich dem Wert der Summe von Zeiten vorzunehmen.

6. Computerprogramm, umfassend Programmcodeeinrichtungen, welche geeignet sind, die Schritte des Verfahrens nach einem der Ansprüche 1 bis 4 auszuführen, wenn das Programm in einem Universalprozessor, einem digitalen Signalprozessor, einem FPGA, einem ASIC, einem Mikroprozessor, einem Mikrocontroller oder irgendeiner anderen Form von programmierbarer Hardware läuft.

## Revendications

1. Procédé d'économie d'énergie pour un dispositif sans fil dans un réseau de télécommunication conforme à la norme IEEE 802.11, le procédé comprenant les étapes suivantes :

a) la réception, dans ledit dispositif sans fil, d'au moins une partie d'une transmission de données, dans lequel ladite partie comprend des informations concernant la longueur de trame contenue dans l'en-tête de couche physique, un champ de durée contenu dans l'en-tête de couche liaison, une adresse du destinataire et une adresse de l'émetteur de ladite transmission ; et sans attendre la fin de la réception du reste de la transmission de données,
b) la détermination du respect d'un premier ensemble de conditions qui comprend au moins la détermination, selon l'adresse du destinataire, du fait que la transmission n'est pas adressée au dispositif ; et la détermination, selon l'adresse de l'émetteur, du fait que la transmission provient du même réseau auquel le dispositif appartient ;
c) dans le cas où le premier ensemble de conditions est respecté, la détermination du respect d'un deuxième ensemble de conditions qui comprend au moins la détermination du fait que le réseau est dans une période de contention, sur la base de la détermination du fait que le réseau n'est pas dans une période sans contention délimitée par une trame de balise initiale et une autre trame de balise finale ; la détermination du fait que les données reçues ne sont pas une trame CTS "prêt à émettre" ; et la détermination pour savoir si la valeur du champ de durée est inférieure ou égale à une valeur maximale de 32767 microsecondes ;
d) dans le cas où le premier ensemble de conditions est respecté, la détermination pour savoir si une somme de temps dépasse un temps d'arrêt minimal précédemment établi selon des limitations matérielles du dispositif, dans lequel ladite somme de temps comprend au moins :

- la durée du reste de la transmission de données plus un intervalle inter-trame minimal précédemment établi ; et
- dans le cas où le deuxième ensemble de conditions est respecté, la valeur du champ de durée, ;

et dans lequel le temps d'arrêt minimal comprend : un temps d'arrêt minimal que met le dispositif pour s'arrêter après qu'une instruction d'arrêt lui a été envoyée ; un temps de démarrage minimal que met le dispositif pour démarrer après qu'une instruction de démarrage lui a été envoyée ; et un temps de préparation minimal que met le dispositif pour être prêt à transmettre ou à recevoir des données ; et
e) dans le cas où la somme est supérieure audit temps d'arrêt minimal précédemment établi selon des limitations matérielles du dispositif, la réalisation d'un micro-arrêt du dispositif avec une durée égale à la valeur de ladite somme de temps.

**2.** Procédé selon la revendication 1, dans lequel l'étape de détermination du fait que la transmission n'est pas adressée au dispositif comprend la comparaison d'une adresse MAC de destination à une adresse MAC du dispositif, dans lequel la comparaison est réalisée à mesure que des octets de la transmission sont reçus dans le dispositif, de sorte que le premier octet différent mène à la fin de la comparaison.

**3.** Procédé selon l'une des revendications précédentes, dans lequel le procédé comprend en outre, une fois le micro-arrêt terminé, l'attente d'au moins un intervalle de temps égal à un intervalle minimal établi pour confirmer qu'un canal est libre, moins l'intervalle de temps inter-trame minimal établi, avant la réception d'une nouvelle transmission.

**4.** Procédé selon l'une des revendications précédentes, dans lequel le dispositif sans fil est une carte sans fil avec un microcontrôleur configuré pour réaliser toutes les étapes du procédé.

**5.** Dispositif sans fil d'économie d'énergie dans un réseau de télécommunication conforme à la norme IEEE 802.11, comprenant une carte sans fil et un microcontrôleur configuré pour :

recevoir au moins une partie d'une transmission de données, dans lequel ladite partie comprend des informations concernant la longueur de trame contenue dans l'en-tête de couche physique, un champ de durée contenu dans l'en-tête de couche liaison, une adresse du destinataire et une adresse de l'émetteur de ladite transmission ; et sans attendre la fin de la réception du reste de la transmission de données ;
déterminer le respect d'un premier ensemble de conditions qui comprend au moins la détermination, selon l'adresse du destinataire, du fait que la transmission n'est pas adressée au dispositif ; et la détermination, selon l'adresse de l'émetteur, du fait que la transmission provient du même réseau auquel le dispositif appartient ;
dans le cas où le premier ensemble de conditions est respecté, déterminer le respect d'un deuxième ensemble de conditions qui comprend au moins la détermination du fait que le réseau est dans une période de contention, sur la base de la détermination du fait que le réseau n'est pas dans une période sans contention, qui est délimitée par une trame de balise initiale et une autre trame de balise finale ; déterminer que les données reçues ne sont pas une trame CTS "prêt à émettre" ; et déterminer si la valeur du champ de durée est inférieure ou égale à une valeur maximale de 32767 microsecondes ;
dans le cas où le premier ensemble de conditions est respecté, déterminer si une somme de temps dépasse un temps d'arrêt minimal précédemment établi selon des limitations matérielles du dispositif, dans lequel ladite somme de temps comprend au moins : la durée du reste de la transmission de données plus un intervalle inter-trame minimal précédemment établi ; et dans le cas où le deuxième ensemble de conditions est respecté, la valeur du champ de durée ;
et dans lequel le temps d'arrêt minimal comprend : un temps d'arrêt minimal que met le dispositif pour s'arrêter après qu'une instruction d'arrêt lui a été envoyée ; un temps de démarrage minimal que met le dispositif pour démarrer après qu'une instruction de démarrage lui a été envoyée ; et un temps de préparation minimal que met le dispositif pour être prêt à transmettre ou à recevoir des données ; et
dans le cas où la somme est supérieure audit temps d'arrêt minimal précédemment établi selon des limitations matérielles du dispositif, réaliser un micro-arrêt du dispositif avec une durée égale à la valeur de ladite somme de temps.

**6.** Programme informatique comprenant des moyens de code de programme appropriés pour réaliser les étapes du procédé selon l'une des revendications 1 à 4 lorsque ledit programme est exécuté dans un processeur d'usage général, un processeur de signal numérique, un réseau prédiffusé programmable par l'utilisateur FPGA, un circuit intégré à application spécifique ASIC, un microprocesseur, un microcontrôleur, ou toute autre forme de matériel programmable.

**FIG. 1**

EP 3 490 309 B1

**FIG. 2**

FIG. 3

FIG. 4

**FIG. 5**

EP 3 490 309 B1

FIG. 6

FIG. 7

FIG. 8

**EP 3 490 309 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006072614 A